# EUROPÄISCHE PATENTANMELDUNG

(11) **EP 0 949 059 A2**
(43) Veröffentlichungstag der Anmeldung: **13.10.1999**
(21) Anmeldenummer: 99100297.3
(22) Anmeldetag: 09.01.1999
(51) Int. Cl.: B29D 24/00, F24J 2/50

(54) **Verfahren zur Herstellung von Wabenmaterial und Wabenmaterial für Transparente Wärmedämmung**

(30) Priorität: 17.02.1998 DE 19806424
(71) Anmelder: HDW-Isoliertechnik GmbH, 24149 Kiel (DE)
(72) Erfinder: Schnurpfeil, Karl-Heinz, Dipl.-Betriebswirt, 24235 Stein bei Laboe (DE); Herrmann, Cord Dipl.-Ing.(FH), 24879 Neuberend (DE)
(74) Vertreter: Zietsch, Anita, Dipl.-Ing.

(57) **Zusammenfassung**

Die Erfindung betrifft ein Verfahren zur Herstellung von Wabenmaterial und Wabenmaterial für Transparente Wärmedämmung (TWD).

Aufgabe der Erfindung ist es, ein plattenförmiges Wabenmaterial (4) herzustellen, das in sich formstabil ist und damit eine problemlose Verarbeitung bei der Herstellung von TWD-Systemen ermöglicht.
Wesentlich bei der Herstellung sind das Erzeugen eines Stranges einer Vielzahl parallel aneinanderliegender Wabenkanäle (6), das Umhüllen des Wabenbündels mit einer stabilisierenden Schicht (5) und das Trennen des Stranges in quaderförmige Blöcke, wobei die Länge der Blöcke von den Abmessungen des TWD-Systems bestimmt wird.

## Beschreibung

Als aktive Wärmedämmung von Fassaden funktioniert die Transparente Wärmedämmung (TWD) wie eine Wärme-Diode. Installiert auf dunklen Außenwänden werden mit Hilfe von Kapillaren- oder Wabenstrukturen die Sonnenstrahlen auf diese gelenkt und, wie auf allen dunklen Oberflächen, absorbiert, sowie in Wärme umgewandelt. Die dabei erwärmte Wand gibt ihrerseits die Wärme an die dahinterliegenden Räume ab.

Die besondere Gestaltung der TWD-Kapillaren bzw. TWD-Waben sorgt dafür, daß die im Raum befindliche Wärme nicht nach außen abgestrahlt werden kann.

Neben ihrer Eigenschaft als Wärmedämmung dient die TWD auch der Nutzung von Tageslicht als Ersatz für den Einsatz von Kunstlicht. TWD kann anstelle herkömmlicher Verglasung oder opaker Außenwände eingesetzt werden. Die Kapillaren des Tageslichtelements streuen das auf die Glasfassade auftreffende Sonnenlicht als weitgehend diffuses Licht in die Tiefe des Raumes.

Der prinzipielle Aufbau eines TWD-Systems besteht aus einer zur Außenwand gerichteten Innenverglasung vorzugsweise aus Profilglas und einer Außenverglasung gleichfalls aus Profilglas, wobei die zwischen den Verglasungen entstehenden Hohlräume mit plattenförmigem Kunststoffkapillar- oder Wabenmaterial derart ausgefüllt werden, daß die Kapillaren bzw. Waben senkrecht zur Ebene der Verglasung stehen.

Von der Firma Okalux wird Plattenförmiges Kapillarmaterial herkömmlich durch Extrudieren hergestellt. Dabei wird der plastifizierte Kunststoff mittels Extruder durch eine Düse gepreßt, deren Form die Entstehung eines einzelnen Kapillarstranges gewährleistet. Dieser Kapillarstrang wird auf eine nachgeschaltete Trommel mit großem Durchmesser aufgewickelt.

Der auf diese Weise aus dem Kapillarstrang gebildete hohlzylindrische Wickelkörper wird radial ausgehend von der Mantellinie des Zylinders in Richtung der Zylinderachse aufgeschnitten, und das dadurch gebildete gestreckte Bündel von Kapillaren wird mit Hilfe eines Hitzdrahtes in Abständen, die der Dicke der herzustellenden Matte entsprechen, getrennt. Bei dieser Trennung schmilzt das Kapillarmaterial und die Schmelzrückstände verschweißen die Enden benachbarter Kapillaren zu einem mattenförmigen Verbund.

Dieser Verbund ist jedoch wenig stabil, so daß bei der Verarbeitung des Kapillarmaterials, insbesondere beim Einschieben des Kapillarmaterials zwischen die Innenverglasung und die Außenverglasung, Probleme derart auftreten, daß die Matten teilweise zerfallen und damit ein Einbau der Matten mit weitgehend durchgängiger Parallelität der Kapillaren nicht gewährleistet werden kann, was letztlich zu einer mangelhaften Funktion der TWD führen kann.

Außerdem wird von der Firma Polygal in Israel hergestelltes Material angeboten. Dabei handelt es sich um maximal 1 m breite Teile mit relativ kleinen Wabengrößen. Diese Teile sind nicht exakt rechteckig, sondem abgerundet. Daraus ergibt sich, daß die Verarbeitung erschwert ist und die Teile manuell eingepaßt werden müssen.

Aufgabe der Erfindung ist es, ein plattenförmiges Wabenmaterial herzustellen, das in sich formstabil ist und damit eine problemlose Verarbeitung bei der Herstellung von TWD-Systemen ermöglicht.

Die Aufgabe wird durch ein Verfahren gemäß Anspruch 1 zur Herstellung von Wabenmaterial und gemäß Anspruch 2 zur Verwendung von Wabenmaterial in Transparenten Wärmedämmungen gelöst.

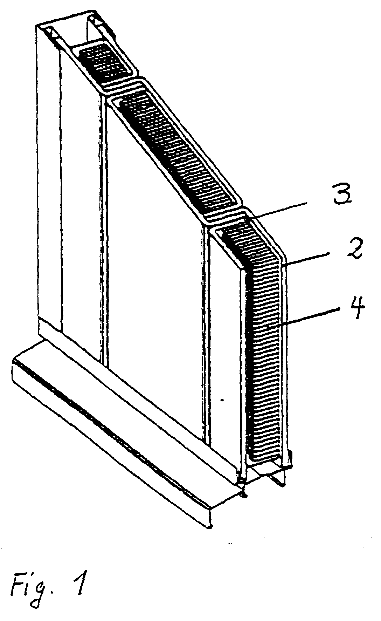

Die Erfindung wird anhand eines Ausführungsbeispiels näher beschrieben. Die dazugehörigen Zeichnungen zeigen in
- Fig.1: die räumliche Darstellung des Aufbaus eines transparenten Wärmedämmsystems,
- Fig. 2: die räumliche Darstellung des Bruchstücks eines Stapels von Wabenmaterialblöcken mit einer dünnen, transparenten Kunststoffolie und

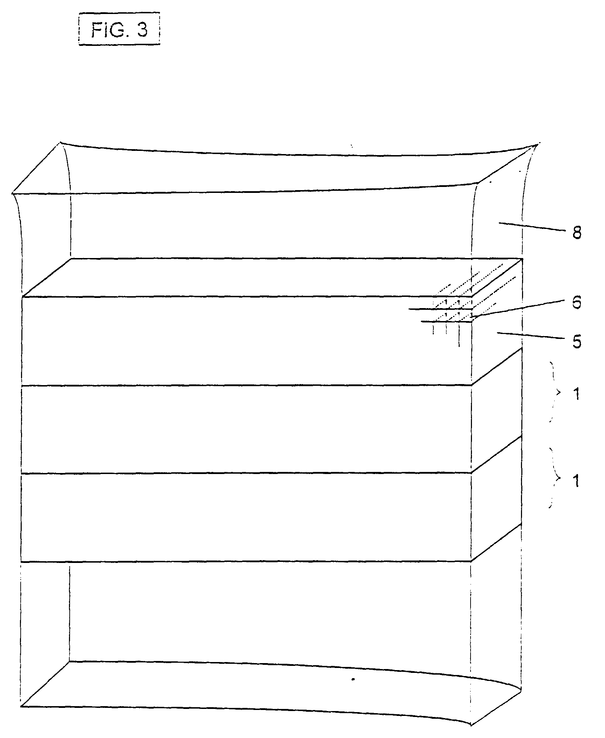

- Fig. 3: die räumliche Darstellung des Bruchstrücks eines Stapels von Wabenmaterialblöcken mit schlauchförmiger, transparenter Schrumpffolie.

Das erfindungsgemäße Wabenmaterial 4 wird gleichfalls durch an sich bekannte Extrusionstechnik hergestellt. Das dabei eingesetzte Strangwerkzeug ist so ausgebildet, daß die Herstellung eines Stranges einer Vielzahl parallel aneinanderliegender Wabenkanäle 6 gewährleistet ist. Dieses Wabenbündel ist umfänglich von einer stabilisierenden Schicht 5 umgeben, die eine formstabilisierende Wirkung auf das Wabenbündel ausübt. Die stabilisierende Schicht 5 besteht aus dem gleichen Material wie die Waben. Der Stang weist vorzugsweise einen rechteckigen Querschnitt auf. Nach dem Verlassen des Strangwerkzeuges und dem Durchlaufen der darauf folgenden Bearbeitungsstufen wird der Strang durch eine Trenneinrichtung in quaderförmige Blöcke 1 geschnitten, wobei die Länge dieser Blöcke 1 durch die Abmessungen des TWD-Systems bestimmt ist.

Diese Blöcke 1 werden bei der Montage des TWD-Systems zwischen die Innenverglasung 2 und die Außenverglasung 3 gestapelt, bis der Zwischenraum durch das Wabenmaterial 4 gefüllt ist. Die am Umfang des Blockes 1 ausgebildete Schicht 5, die eine formstabilisierende Wirkung auf den Block 1 ausübt, erleichtert die Handhabung des Wabenmaterials 4 bei der Montage des TWD-Systems.

Eine weitere Verbesserung der Stabilität des Wabenmaterials 4 und damit dessen Verarbeitbarkeit wird dadurch erreicht, daß mehrere montagegerecht zu einem Wabenblockstapel 9 zusammengefaßte Wabenblöcke 1 von einer dünnen, transparenten Kunststoffolie 7 derart bedeckt werden, daß die Öffnungen der Waben 6 auf beiden Seiten des Wabenblockes 1 verschlossen sind.

Eine weitere Möglichkeit, zu den beschriebenen Vorteilen zu gelangen, besteht darin, den Wabenblockstapel 9 aus Wabenblöcken 1 durch eine schlauchförmige, transparente Schrumpffolie 8 vollflächig zu umhüllen. Damit wird die Herstellung von montagegerechten Wabenblockmodulen ermöglicht.

Diese Form von Wabenblockmodulen gestattet es besser, auf die Funktion des TWD-Systems Einfluß zu nehmen. Durch Verwendung einer äußeren Folie aus einem Material, das seine Transparenz entsprechend dem einfallenden Licht selbständig (thermotroph) oder durch Anlegen einer Steuerspannung (elektrochrom) verändert, kann eine der wichtigsten Forderungen zum Einsatz von TWD-Material umgesetzt werden.

Das so hergestellte TWD-Wabenblockmodul stellt damit ein komplexes Bauelement mit mehreren Eigenschaften dar.

Die Verarbeitbarkeit wird deutlich verbessert, die Verschmutzungsgefahr auf der Baustelle und während der Nutzungszeit nimmt stark ab, zusätzliche mechanische Abschattungsvorrichtungen können ggf. entfallen.

### Liste der verwendeten Bezugszeichen

- 1: Wabenblock
- 2: Innenverglasung
- 3: Außenverglasung
- 4: Wabenmaterial
- 5: stabilisierende Schicht
- 6: Wabenkanäle
- 7: Kunststoffolie
- 8: schlauchförmige, transparente Schrumpffolie
- 9: Wabenblockstapel

## Patentansprüche

1. Verfahren zur Herstellung von Wabenmaterial (4) zur Verwendung in Transparenten Wärmedämmungen durch folgende Schritte:
kontinuierliches Zuführen von Kunststoffmaterial zu dem Strangwerkzeug einer Extruderanlage, wobei das Strangwerkzeug so ausgebildet ist, daß die Herstellung eines Stranges mit rechteckigem Querschnitt gewährleistet ist und der Strang aus einem Bündel parallel nebeneinanderliegender, rechteckiger Waben (6) besteht, das umfänglich von einer stabilisierenden Schicht (5) umgeben ist, die eine formstabilisierende Wirkung auf den Wabenblock (1) ausübt,
Trennen des Stranges nach dem Verlassen des Strangwerkzeuges und dem Durchlaufen nachfolgender Bearbeitungsstufen durch eine Trenneinrichtung quer zur Strangachse in quaderförmige Wabenblöcke (1), wobei die Dicke dieser Blöcke (1) durch die Abmessungen des TWD-Systems bestimmt ist,
Stapeln einer Mehrzahl dieser Wabenblöcke (1) zu einem verarbeitbaren Wabenblockstapel (9), derart, daß die Blöcke (1) mit ihren Umfangsflächen aneinander und die Schnittflächen der Blöcke (1) in einer Ebene liegen,
Umhüllen des Wabenblockstapels (9) mit einer Kunststoffolie (7,8) zur Gewährleistung der Formstabilität des Wabenblockstapels (9) und zum gleichzeitigen Verschließen der Öffnungen der Waben (6) der Blöcke (1).

2. Wabenmaterial zur Verwendung in Transparenten Wärmedämmungen, dadurch gekennzeichnet, daß
das Wabenmaterial (4) zur Bildung eines verarbeitbaren Blockes (1) aus einem Bündel parallel verlaufender Kapillarkanäle (6) gleicher Länge besteht, das umfänglich von einer den Querschnitt des Bündels stabilisierenden Schicht (5) umgeben ist, wobei die Dicke der Schicht (5) deutlich stärker ist, als die Wanddicke der inneren Wabenkanäle (6).

3. Wabenmaterial nach Anspruch 2, dadurch gekennzeichnet, daß die Blöcke (1) quaderförmig ausgebildet sind und zu Stapeln (9) mit richtungsgleich verlaufenden Waben (6) stapelbar sind, wobei die Seiten des Wabenblockes (1), in die Wabenöffnungen münden, in einer Ebene angeordnet sind, und daß die gestapelten Blöcke (1) durch eine die Wabenöffnungen abdeckende Folie (7,8) verbunden sind.

4. Wabenmaterial nach Anspruch 3, dadurch gekennzeichnet, daß die gestapelten Blöcke (1) durch eine umlaufende, transparente Folie, vorzugsweise durch eine schlauchförmige Schrumpffolie (8), verbunden sind.

5. Wabenmaterial nach Anspruch 2 bis 3,
dadurch gekennzeichnet, daß
eine der die Wabenöffnungen abdeckenden Folien als schaltbare Folie ausgebildet ist, wobei der Schaltvorgang sowohl durch eine thermische Reaktion (thermotroph) als auch durch Anlegen einer Schaltspannung (elektrochrom) ausführbar ist.
